# EUROPEAN PATENT SPECIFICATION

(11) **EP 0 511 762 B1**
(45) Date of publication and mention of the grant of the patent: **20.03.1996**
(21) Application number: 92303495.3
(22) Date of filing: 16.04.1992
(51) Int. Cl.: G01L 23/10, G01L 9/00, G01H 11/08, G01P 15/09

(54) **Piezoelectric sensor**
Piezoelektrischer Messfühler
Détecteur piézoélectrique

(30) Priority: 27.04.1991 JP 125414/91; 06.12.1991 JP 349644/91
(43) Date of publication of application: 04.11.1992
(73) Proprietor: NGK SPARK PLUG CO., LTD, Nagoya-shi Aichi-ken (JP)
(72) Inventor: Toyoda, Hideki, Nagoya-shi, Aichi-ken (JP); Kojima, Takao, Nagoya-shi, Aichi-ken (JP); Shimozato, Tetsuma, Nagoya-shi, Aichi-ken (JP)
(74) Representative: Muir, Ian R.

(56) References cited:
- DE-A- 4 010 609
- DATABASE WPI Week 8907, Derwent Publications Ltd., London, GB; AN 89-050136 & JP-A-1 005 998
- PATENT ABSTRACTS OF JAPAN vol. 006, no. 087 (E-108) 25 May 1982 & JP-A-57 023 287
- DATABASE WPI Week 7349, Derwent Publications Ltd., London, GB; AN 73-75627U & JP-A-73 040 396
- PATENT ABSTRACTS OF JAPAN vol. 010, no. 173 (P-469) 18 June 1986 & JP-A-61 023 933
- PATENT ABSTRACTS OF JAPAN vol. 015, no. 236 (E-1078) 18 June 1991 & JP-A-30 71 681
- PATENT ABSTRACTS OF JAPAN vol. 014, no. 229 (E-0928) 15 May 1990 & JP-A-20 60 219
- Pages 120,121,148,149 from the book "Piezoelektrische Messtechnik" by J.Tichy and G.Gautschi, Berlin 1980

## Description

This invention is directed to a piezoelectric sensor to be mounted on a cylinder block of an internal combustion engine for detecting the inside pressure of the cylinder block.

It is known to use a piezoelectric sensor for detecting the inside pressure of a cylinder of an internal combustion engine. Such a sensor has a main body adapted to be attached to the cylinder block by threading engagement with a threaded hole provided in a wall thereof. The main body has a hole within which a piezoelectric element and a pressure transmitting bar are accommodated and which is closed by a diaphragm so that, when the sensor is attached to the cylinder block, the pressure inside of the cylinder block is transmitted through the diaphragm and the pressure transmitting bar to the piezoelectric element, whereby the pressure is converted into an electrical signal. As the piezoelectric element, lead titanate zirconate or lead titanate has been used.

The known piezoelectric sensor has been found to have a drawback that it is necessary to use the sensor in conjunction with cooling means adapted to maintain the sensor in a low temperature range, since otherwise the piezoelectric element is deteriorated during use. More particularly, the piezoelectric sensor is generally exposed to a high temperature of about 500 °C so that the piezoelectric element is also subjected to a temperature as high as about 400 °C. Since the Curie temperatures of lead titanate zirconate and lead titanate are about 250 °C and 350 °C, respectively, the piezoelectric element is apt to cause depolarization which results in deterioration in the piezoelectric characteristics thereof.

While such deterioration can be avoided by providing suitable cooling means for maintaining the element at a temperature beneath the Curie temperature thereof, the structure of the sensor becomes large and complicated. The known piezoelectric sensor has another drawback that the S/N ratio tends to be lowered during use due to pyroelectric effect.

### Summary of the Invention

It is, therefore, an object of the present invention to provide a piezoelectric sensor which is devoid of the drawbacks of the known piezoelectric sensor.

Another object of the present invention is to provide a piezoelectric sensor which is suitably used for detecting a physical quantity of a body which is capable of being converted into a mechanical strain, such as an inside pressure or vibration of an internal combustion engine or acceleration of a vehicle.

It is a special object of the present invention to provide a piezoelectric sensor of the above mentioned type which has a high heat resistance and has a long service life.

It is yet a further object of the present invention to provide a piezoelectric sensor of the above mentioned type which has a high S/N ratio.

According to the present invention, there is provided a piezoelectric sensor for an internal combustion engine having a cylinder, comprising:
a main body adapted to be attached to the cylinder and defining an axially extending hole therewithin;
a diaphragm attached to one end of said main body for closing said hole; and
a piezoelectric element disposed within said hole so that the pressure within said cylinder is transmitted to said piezoelectric element through said diaphragm,
said piezoelectric element being a circular or polygonal disc with a thickness of 0.3-1.5 mm, being formed of a single crystal piezoelectric element having a Curie temperature of more than 500°C, and being polarized such that the direction of the polarization is oriented at an angle of 20° or less with respect to the X-Y plane of the disc.

Lithium niobate (LiNbO₃) and lithium tantalate (LiTaO₃) have Curie temperatures of about 1,200°C and about 650°C, respectively and exhibit a good heat resistance. These piezoelectric elements, however, are apt to be broken when cut with an ordinary cutting method using, for example, a diamond cutter, an ultrasonic cutter or a laser beam. Thus, at least a thickness of about 0.3 mm of the piezoelectric element is required for withstanding the cutting operation. A thickness of the element of at least 0.3 mm is also desirable to ensure both satisfactory accuracy in pressure receiving surfaces and good parallelism. Too large a thickness in excess of 1.5 mm, on the other hand, causes cracks of the piezoelectric element by thermal shock. The piezoelectric element preferably has a thickness of about 0.5-1.0 mm.

The direction of the polarization of the piezoelectric element should be oriented at an angle of not greater than 20° with respect to the X-Y plane thereof for reasons of an improved S/N ratio.

### Brief Description of the Drawings

Other objects, features and advantages of the present invention will become apparent from the detailed description of the preferred embodiments of the invention which follows, when considered in light of the accompanying drawings, in which:
Fig. 1 is an elevational, cross-sectional view schematically showing one embodiment of piezoelectric sensor according to the present invention;
Fig. 2 is a perspective view schematically showing an example of the piezoelectric element to be used in the sensor of Fig. 1;
Fig. 3 is a perspective view schematically showing another example of the piezoelectric element;
Fig. 4 is a perspective view explanatory of a method of fabricating piezoelectric elements;
Fig. 5 is a graph showing a relationship between the charge produced by pyroelectric effect of a lithium niobate single crystal and the orientation angle in the Z-axis component of the polarization of the lithium niobate single crystal;
Fig. 6 is an explanatory view of the orientation of polarization on the XYZ coordinate;
Fig. 7 is an elevational, cross-sectional view showing another piezoelectric sensor (not claimed); and
Fig. 8 is an elevational, cross-sectional view showing a further piezoelectric sensor (not claimed).

### Detailed Description of the Preferred Embodiments of the Invention

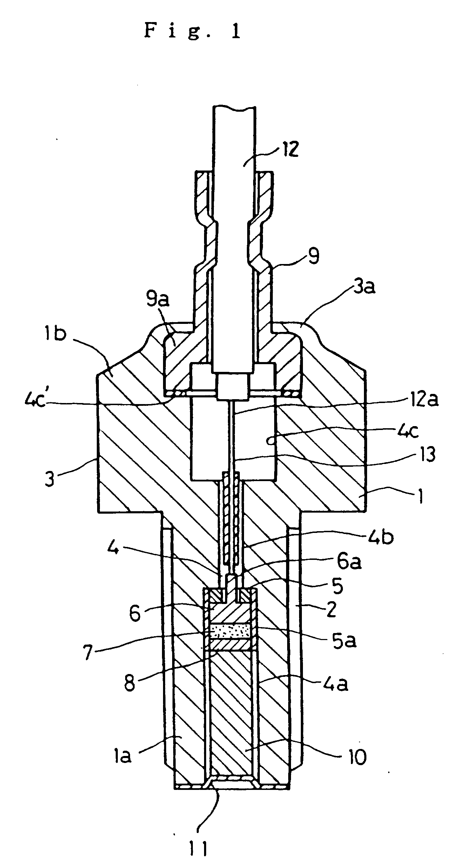

Referring now to Fig. 1, the reference numeral 1 denotes a main body formed of a metal and having a lower portion 1a whose outer periphery is threaded to form a male thread 2 adapted to be in threading engagement with a female thread formed in the wall of a cylinder block (not shown) of an internal combustion engine. The main body has an intermediate portion 3 shaped to have a hexagonal cross section to facilitate the attachment of the main body 1 to the cylinder block by a suitable fastening means such as a spanner. The main body 1 has an axially extending through-hole 4 composed of a lower, medium diameter portion 4a, an intermediate, smaller diameter portion 4b and an upper, larger diameter portion 4c.

In the lower portion 4a of the through-hole 4, there are accommodated an electrically insulating ring 5, a first terminal 6, a piezoelectric element 7, a second terminal 8 and a pressure-transmitting bar 10 arranged in this order toward the lower open end portion of the main body 1. Designated as 5a is an electrically insulating material provided for insulating the piezoelectric element 7 from the main body 1. The first terminal 6 has a protrusion 6a extending through the insulating ring 5 and connected to a lead wire 13.

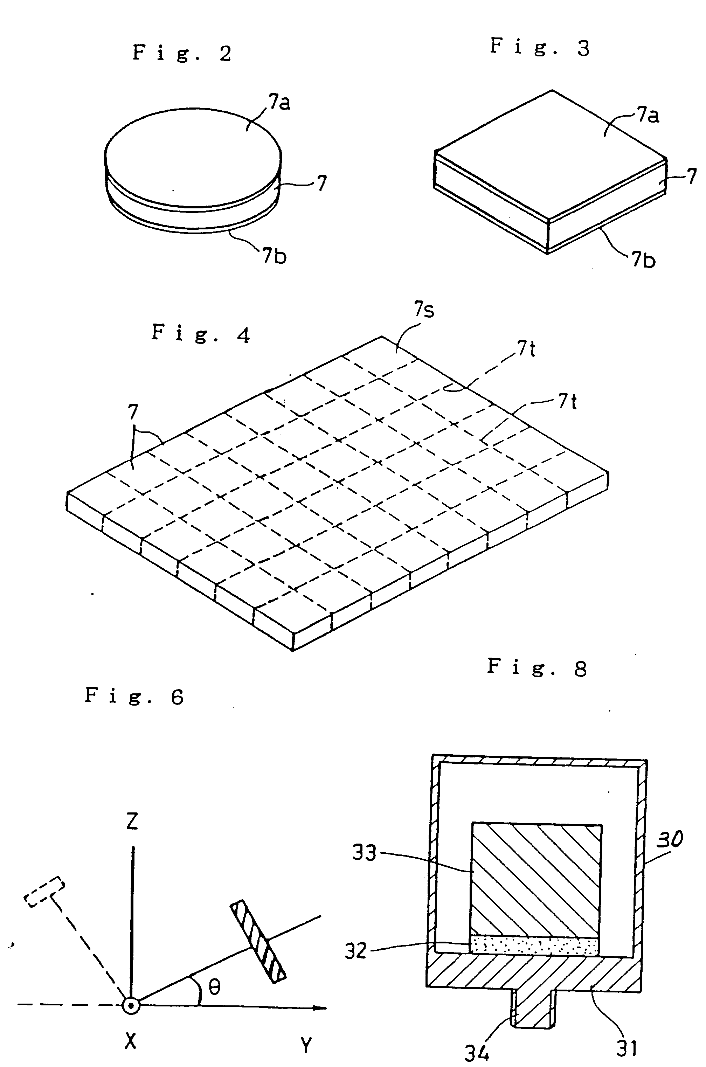

The piezoelectric element may be in the form of a circular disc as shown in Fig. 2 or a square disc as shown in Fig. 3. From the standpoint of economy, the square type discs are preferred. Fig. 4 is a schematic representation of the method for the fabrication of square discs. By cutting a large plate of a single crystal piezoelectric material along a number of longitudinal and lateral lines 7t, a large amount of discs in the square form can be easily produced. It is important that the piezoelectric element should have a thickness of 0.3-1.5 mm and should be formed of a single crystal piezoelectric element having a Curie temperature of more then 500 °C to ensure improved heat resistance and resistance to thermal and mechanical shocks.

The piezoelectric disc 7 is provided with upper and lower electrodes 7a and 7b formed by plating, vacuum deposition or any other customarily employed manner. For reasons of improved adhesion, it is advisable to use an ink containing nickel, silver or the like metal dispersed in an organic medium for the formation of the electrodes 7a and 7b. In this case, it is preferred that, after the ink has been printed over both surfaces of the disc, the above-described first and second terminals 6 and 8 be superposed thereon and the resulting assembly be baked together, since very good electrical contact can be obtained.

Turning again to Fig. 1, the lower opening of the through-hole 4 is closed by a diaphragm 11 formed of a heat-resistant metal such as inconel, SUS630 stainless steel or the like alloy. The adjacent two of the above members accommodated within the lower portion 4a of the through-hole 4 are disposed in pressure contact with each other so that the pressure applied to the diaphragm 11 is transmitted to the piezoelectric element 7.

The larger diameter portion 4c has a stepped seat 4c' with which a widened portion 9a of a metal sleeve 9 is in pressing engagement. The above-described cable 12 is caulked with the sleeve 9 which, in turn, is tightly fixed to the main body 1 by an upper thin wall portion 3a of the main body 1 which is inwardly forcibly bent over the outer periphery of the widened portion 9a of the sleeve 9.

The cable 12 has a core wire 12a which is connected to the lead wire 13 extending through the small diameter portion 4b from the first terminal 6a so that the cable 12 is electrically connected to the piezoelectric element 7 through the upper electrode 7a. The lower electrode 7b of the piezoelectric element 7 is grounded to the main body 1 through the second terminal 8 and the pressure-transmitting bar 10.

As a result of the above construction, when the main body 1 is attached to a cylinder block of an internal combustion engine with the external thread 2 being in engagement with a female thread of the cylinder block, the pressure within the cylinder block is transmitted to the piezoelectric element 7 through the diaphragm 11 and the pressure-transmitting bar so that the piezoelectric element outputs an electrical signal through the cable 12.

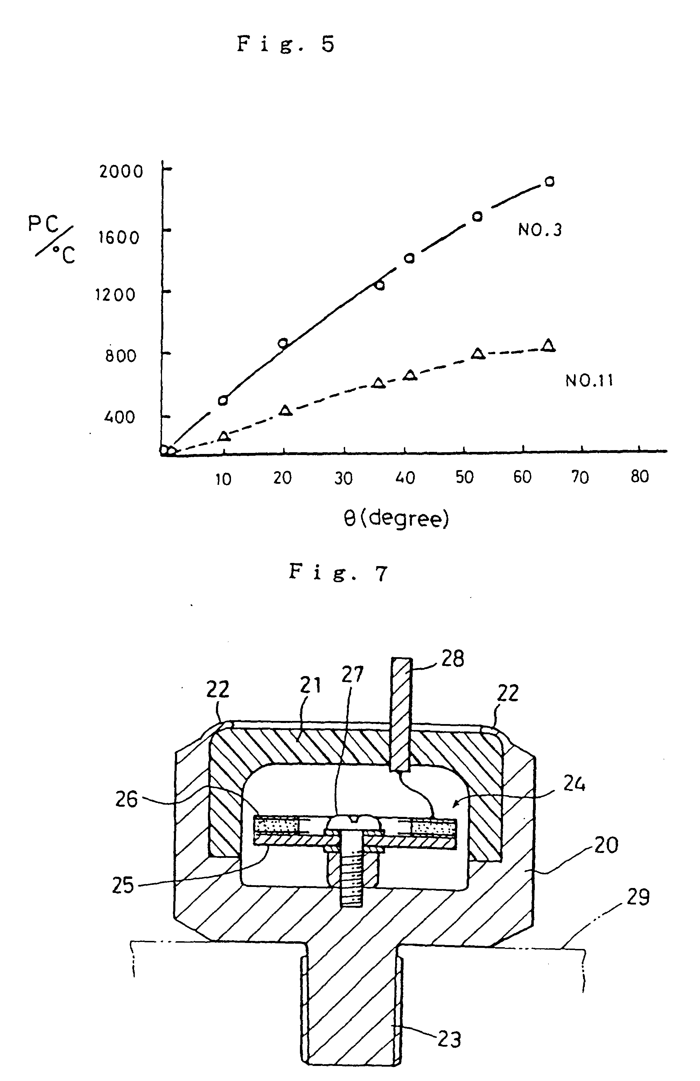

Fig. 7 illustrates another piezoelectric sensor which is used for detecting the knocking of an internal combustion engine. Designated as 20 is a main body formed of a metal and having a lower protrusion 23 which extends coaxially with the main body 20 and whose outer periphery is threaded to form a male thread adapted to be in threading engagement with a female thread formed in the wall of a cylinder block 29 of an internal combustion engine. The main body 20 is shaped to have a hexagonal cross section to facilitate the attachment to the cylinder block 29 by a suitable fastening means such as a spanner. The main body 20 has a central bore whose top opening is closed by a lid 21 tightly secured to the main body 20 by by an upper thin wall portion 22 of the main body 20 which is inwardly forcibly bent over the outer periphery of the lid 21.

Accommodated within the bore of the main body 20 is a vibration sensor generally indicated as 24. The vibration sensor 24 has a metal thin plate 25 secured to the center of a lower base portion of the main body 1 with a bolt 27. A piezoelectric element 26 in the form of a ring is supported on the metal plate 25. The piezoelectric element 26 preferably is formed of a single crystal piezoelectric ceramic having a Curie temperature of more then 500 °C. The piezoelectric element 26 is provided with electrodes on both surfaces thereof. One of the electrodes is electrically connected to a terminal 28 extending through and secured by the lid 21, with the other electrode being grounded to the main body 20 through the metal plate 25 and the bolt 27.

When the combustion chamber of the engine causes knocking, the shock is transmitted to the cylinder block as a mechanical vibration, which in turn is transmitted to the bolt 27 to cause the bolt 27 to vibrate. This vibration is transmitted to the piezoelectric element 26 so that a signal voltage is generated. By detecting the voltage, it is possible to detect the knocking of the engine.

Fig. 8 depicts a further piezoelectric sensor which is used as an acceleration detector of a moving body. Designated as 30 is a casing having a lower, thick wall base portion 31 from which a protrusion 34 downwardly extends coaxially with the casing 30. The outer periphery is of the protrusion 34 is threaded to form a male thread adapted to be in threading engagement with a female thread formed in a moving body (not shown). Accommodated within the casing 30 is a piezoelectric element 32 directly placed on the base portion 31 of the casing 30. The piezoelectric element 32 is overlaid with a weight 33. The piezoelectric element 32 is formed of a single crystal piezoelectric ceramic having a Curie temperature of at least 500 °C and is provided with electrodes on both surfaces thereof for connection to lead wires (not shown). The above acceleration detecting sensor may be used, for example, as an actuator of an air bag of automobiles.

In the foregoing embodiment illustrated in Fig . 1 the piezoelectric element is preferably formed of a LiNbO₃ single crystal.

A single crystal piezoelectric element which is polarized in the direction oriented at an angle of 20° or less with respect to the X-Y plane thereof for reasons of improved heat resistance and smallness in pyroelectricity should be used. Since, in the sensors of Figs. 7 and 8, the piezoelectric element is not directly exposed to such a high pressure as in the element of the sensor shown in Fig. 1, the thickness of the piezoelectric element is not limited to 0.3-1.5 mm.

The following example will further illustrate the present invention.

### Example

A LiNbO₃ single crystal was cut using ultrasonic wave cutting means into various shapes as shown in Table 1. Sample No. 4 only was made from a LiTaO₃ single crystal. Sample Nos. 2, 4 and 15 were in the form of squares, while the other samples were circular discs. Each of the piezoelectric discs thus formed was set in a piezoelectric sensor as shown in Fig. 1 using a diaphragm having a size as shown in Table 1. The diaphragms used in Samples Nos. 8 and 12-15 had a thickness of 0.2 mm while the other samples used diaphragms with a thickness of 0.1 mm. Each of the sensors thus constructed was mounted on an internal combustion engine of an automobile having the nominal specification of a cylinder volume of 2000 cc, a revolution of 6000 rpm and a maximum inside cylinder pressure of 70 kg/cm. After 100 hours running, the piezoelectric element was removed from the sensor for determining whether or not the element was broken. The results were as shown in Table 1.

Similar samples were also tested for their pressure dependency by measuring the relationship between the generated charge and the pressure within the cylinder. As a result, Samples Nos. 1, 4 and 7 showed slightly poor pressure dependency. Similar samples were further tested for their temperature dependency by heating with a band heater. As a result, Samples Nos. 1 and 7 were found to show significant temperature dependency. The partial pressure in the diaphragm is considered to have a great influence upon the properties of the piezoelectric elements. The poor pressure dependency of Sample No. 4 is attributed to the relatively poor piezoelectric characteristics of LiTaO₃.

Piezoelectric discs similar to those used in Samples Nos. 3 and 11 were tested for their pyroelectric characteristics. Thus various discs cut along various different directions were prepared and alternately immersed in a tank containing 0 °C water and in a tank containing 150 °C silicone oil. The test results are shown in Fig. 5 as a graph showing the relationship between the charge generated by the temperature change (ordinate) and the degree θ of the Z-axis component of the polarization (abscissa). As will be appreciated from the results shown in Fig. 5, it is preferred that the Z-axis component be small. The angle θ represents the deviation angle of the polarization direction from the plane (X-Y plane) toward the direction of the thickness (Z-axis). Namely, when the θ is 90°, the polarization direction is in parallel with the direction of the thickness. When the θ is 0°, the polarization direction is in parallel with the plane of the disc.

It is also revealed that an angle θ of 20° or less is preferable for reasons of attaining a pressure sensitivity of 10 atm or less. More preferred is an angle θ of 10° or less corresponding to a pressure sensitivity of 5 atm or less. In this case, filtering in the circuit becomes easy and good piezoelectric characteristics are obtainable.

Piezoelectric element samples having no Z-axis component (θ = 0) showed almost no pyroelectricity and, thus, exhibited excellent characteristics. Among the samples having no Z-axis component (θ = 0) and cut along Y- or X-axis, those cut along the Y-axis showed better piezoelectric characteristics (about 20 pC/N) than those cut along the X-axis (less than 10 pC/N) and were found to have good mechanical properties.

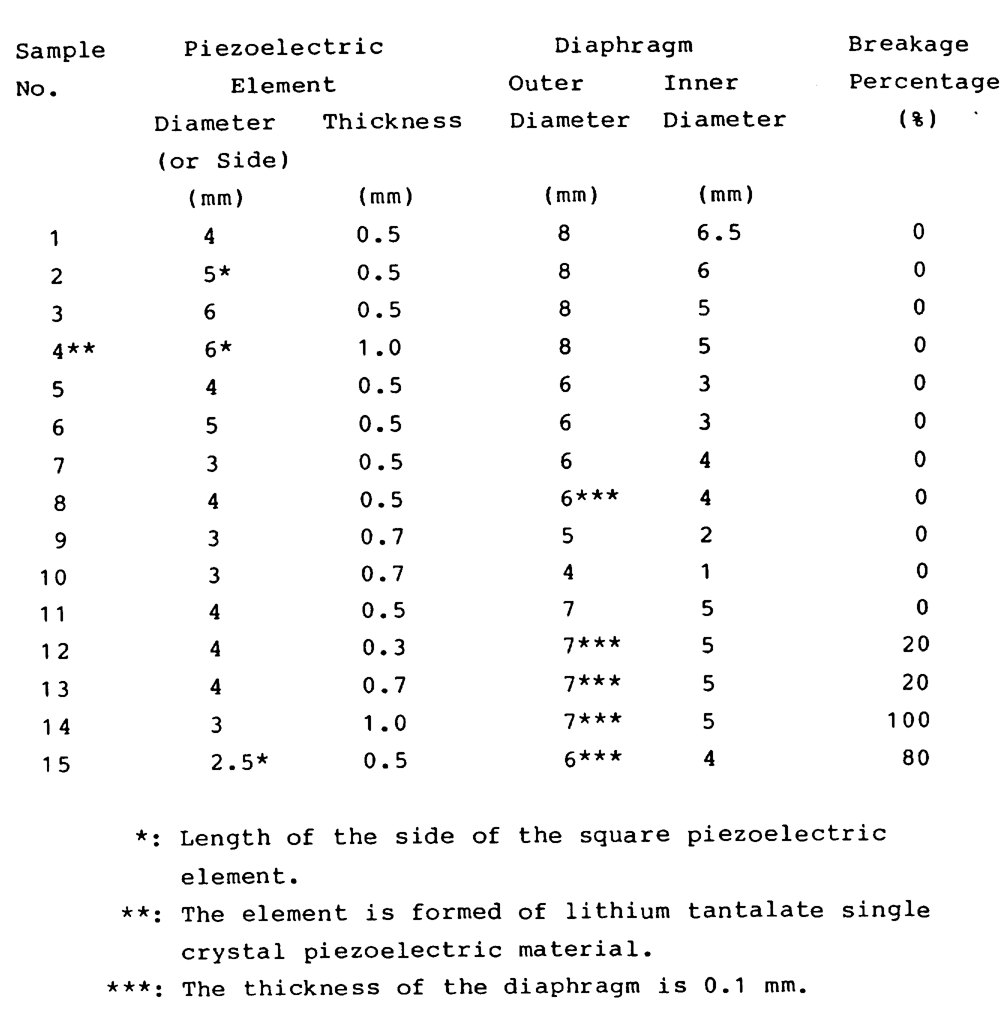

## Claims

1. A piezoelectric sensor for an internal combustion engine having a cylinder, comprising:
a main body (1) adapted to be attached to the cylinder and defining an axially extending hole (4) therewithin;
a diaphragm (11) attached to one end of said main body for closing said hole; and
a piezoelectric element (7) disposed within said hole (4) so that the pressure within said cylinder is transmitted to said piezoelectric element through said diaphragm (11),
said piezoelectric element (7) being a circular or polygonal disc with a thickness of 0.3-1.5 mm, being formed of a single crystal piezoelectric element having a Curie temperature of more than 500°C, and being polarized such that the direction of the polarization is oriented at an angle of 20° or less with respect to the X-Y plane of the disc.

2. An piezoelectric sensor as claimed in claim 1, wherein said piezoelectric element (7) is formed of LiNbO₃.

## Revendications

1. Capteur piézoélectrique pour un moteur à combustion interne comportant un cylindre, comprenant:
un corps principal (1) adapté pour être fixé au cylindre et définissant un trou (4) s'étendant axialement dans ce cylindre;
un diaphragme (11) fixé à une des extrémités dudit corps pour fermer ledit trou; et
un élément piézoélectrique (7) disposé à l'intérieur dudit trou (4) de manière que la pression régnant dans ledit cylindre soit transmise audit élément piézoélectrique par l'intermédiaire dudit diaphragme (11),
ledit élément piézoélectrique (7) étant un disque circulaire ou polygonal ayant une épaisseur de 0,3-1,5mm, étant formé d'un élément piézoélectrique monocristallin présentant une température de Curie supérieure à 500°C, et étant polarisé de telle sorte que la direction de la polarisation soit orientée suivant un angle de 20° ou moins par rapport au plan X-Y du disque.

2. Capteur piézoélectrique selon la revendication 1, dans lequel ledit élément piézoélectrique (7) est formé de LiNbO₃.

## Patentansprüche

1. Piezoelektrischer Sensor für einen Verbrennungsmotor, der einen Zylinder aufweist, umfassend:
einen Hauptkörper (1), der zum Befestigen am Zylinder eingerichtet ist, und in dem ein axial verlaufendes Loch (4) bestimmt ist;
eine Membran (11), die an einem Ende des Hauptkörpers befestigt ist, um das Loch zu verschließen; und
ein piezoelektrisches Bauteil (7), das im Loch (4) angeordnet ist, so daß der Druck innerhalb des Zylinders über die Membran (11) auf das piezoelektrische Bauteil übertragen wird,
wobei das piezoelektrische Bauteil (7) eine kreis- oder polygonförmige Scheibe mit einer Dicke von 0,3 bis 1,5 mm ist, aus einem piezoelektrischen Einkristall-Bauteil mit einer Curietemperatur von über 500°C gebildet und so polarisiert ist, daß die Polarisationsrichtung mit einem Winkel von 20° oder weniger bezogen auf die X-Y-Ebene der Scheibe ausgerichtet ist.

2. Piezoelektrischer Sensor nach Anspruch 1, wobei das piezoelektrische Bauteil (7) aus LiNbO₃ ausgebildet ist.
